# EUROPEAN PATENT APPLICATION

(11) **EP 2 620 879 A1**
(43) Date of publication of application: **31.07.2013**
(21) Application number: 11826374.8
(22) Date of filing: 26.08.2011
(51) Int. Cl.: G06F 17/30

(54) **METHOD AND SYSTEM OF DISPLAYING FRIEND STATUS AND COMPUTER STORAGE MEDIUM FOR SAME**

(30) Priority: 26.09.2010 CN 201010292477
(71) Applicant: Tencent Technology (Shenzhen) Company Limited, Shenzhen, Guangdong 518044 (CN)
(72) Inventor: CHEN, Min, Shenzhen Guangdong 518044 (CN); ZHOU, Qing, Shenzhen Guangdong 518044 (CN); LIN, Shuyang, Shenzhen Guangdong 518044 (CN); HUANG, Xiaojun, Shenzhen Guangdong 518044 (CN); YANG, Yong, Shenzhen Guangdong 518044 (CN); ZHENG, Zhihao, Shenzhen Guangdong 518044 (CN); LIANG, Zhu, Shenzhen Guangdong 518044 (CN); CHEN, Shan, Shenzhen Guangdong 518044 (CN); XU, Xiao, Shenzhen Guangdong 518044 (CN)
(74) Representative: Johnson, Richard Alan
(86) International application number: PCT/CN2011/079009
(87) International publication number: WO 2012/037847

(57) **Abstract**

A method for displaying activities of friends, including steps as follows: generating activity information from the activities of friends according to the friend relationship chain; classifying the activity information according to the preset classification rule to obtain the corresponding classification collection; acquiring the screening condition, extracting activity information that meets the screening condition from the classification collection, and displaying the activity information extracted. In the above method and system for displaying activities of friends, through the classification and screening of activity information, we can get and show the activities of friends which meet the screening condition inputted by the user. Using this method and system, fast screening can be realized in large amounts of information and all the friends' effective activities can be provided to the user, which suffices the need of personalized browsing.

## Description

### FIELD OF THE INVENTION

The present invention relates to the internet technology, and in particular to a method, system and computer storage media for displaying activities of friends.

### BACKGROUND OF THE INVENTION

With the continuous development and popularization of the network, life on the Internet has become an indispensable part of people's lives. More and more people participate in network activities, making the amount of network information has an explosion of growth. At the same time, social networking services, referred to as SNS, is no longer a relationship between single user and single user, but a relationship between a single user and multiple users, even between multiple users with multiple users. Therefore, the SNS network includes lots of specific information, such as network users, users' activities and their relationships network.

Facing the large amount of users and information in SNS network, it is the chief issue to obtain the required information and content quickly and efficiently for the traditional SNS network. However, SNS network often displays the activity information of user's friends in a scramble way, in which we cannot obtain required friends' activities quickly.

### SUMMARY OF THE INVENTION

Therefore, there is a need to provide a method for displaying activities of friends which can screen the activities of friends' information.

Furthermore, there is also a need to provide a system for displaying activities of friends which can screen the activities of friends' information.

A method for displaying activities of friends, comprises: generating activity information from the activities of friends according to a friend relationship chain; classifying the activity information according to a preset classification rule to obtain the corresponding classification collection; acquiring a screening condition, extracting activity information that meets the screening condition from the classification collection, and displaying the activity information extracted.

Preferably, the step of classifying the activity information according to the preset classification rule to obtain the corresponding classification collection, comprises:
extracting an attribute associated with the classification rule from the activity information, according to the preset classification rule; and
classifying the activity information according to the attribute to form the classification collection.

Preferably, the classification rule comprises at least one of an information attribute, a friend attribute, and a user event attribute.

Preferably, the step of acquiring the screening condition, extracting activity information that meets the screening condition from the classification collection, and displaying the activity information extracted, comprises:
acquiring the screening condition;
obtaining classification collection corresponding to the screening condition; and
extracting the activity information from the classification collection corresponding to the screening condition, and displaying the activity information extracted.

Preferably, the screening condition comprises multiple screening conditions, and after the step of obtaining the classification collection corresponding to the screening condition, the method further comprises:
obtaining intersection from the classification collection corresponding to the screening condition.

A system for displaying activities of friends, at least comprises: an aggregation server configured to generate activity information from the activities of friends according to a friend relationship chain; an activity information server configured to classify the activity information according to a preset classification rule to obtain the corresponding classification collection; and a client configured to acquire a screening condition, extracting activity information that meets the screening condition from the classification collection, and displaying the activity information extracted.

Preferably, the activity information server comprises: an extraction module configured to extract an attribute associated with the classification rule from the activity information, according to the preset classification rule; and a classification module configured to classify the activity information according to the attribute to form the classification collection.

Preferably, the classification rule which the extraction module is according to, comprise at least one of an information attribute, a friend attribute, and a user event attribute.

Preferably, the client comprises: an identification module configured to acquire the screening condition; a screening module configured to obtaining the classification collection corresponding to the screening condition; and a displaying module configured to extract the activity information from the classification collection, and displaying the activity information extracted.

Preferably, the screening condition comprises multiple screening conditions, the client further comprises:
a merge module configured to obtain intersection from the screened classification collection.

Furthermore, it further provides a computer storage media for storing the computer-executable instructions, which control the computer to execute a method for displaying activities of friends, the method comprises:
generating activity information from the activities of friends according to a friend relationship chain;
classifying the activity information according to the preset classification rule, to obtain the corresponding classification collection; and
acquiring a screening condition, extracting activity information that meets the screening condition from the classification collection, and displaying the activity information extracted.

Preferably, the step of classifying the activity information according to the preset classification rule to obtain the corresponding classification collection, comprises:
extracting an attribute associated with the classification rule from the activity information, according to the preset classification rule; and
classifying the activity information according to the attribute to form the classification collection.

Preferably, the classification rule comprises at least one of an information attribute, a friend attribute, and a user event attribute.

Preferably, the step of acquiring the screening condition, extracting activity information that meets the screening condition from the classification collection, and displaying the activity information extracted, comprises:
acquiring the screening condition;
obtaining classification collection corresponding to the screening condition; and
extracting the activity information from the classification collection corresponding to the screening condition, and displaying the activity information extracted.

Preferably, the screening condition comprises multiple screening conditions, and after the step of obtaining the classification collection corresponding to the screening condition, the method further comprises:
obtaining intersection from the classification collection corresponding to the screening condition.

Through the above-mentioned method and system displaying activities of friends, after classifying and screening the activity information, we can get and further display friends' activities which meet the screening condition inputted by the user. The invention realizes the rapid screening in large amount of information, providing all the friends' effective activities rapidly for the user, meeting users' demand for personalized browsing.

### BRIEF DESCRIPTION OF THE DRAWINGS

Figure 1 is a flowchart of a method for displaying activities of friends according to the invention;
Figure 2 is a flowchart of method for displaying activities of friends in an embodiment;
Figure 3 is an interface diagram of an embodiment obtaining the screening condition in an embodiment;
Figure 4 is a schematic diagram of a system for displaying activities of friends according to the invention;
Figure 5 is a block diagram of an embodiment of the activity information server in an embodiment;
Figure 6 is a block diagram of the client in an embodiment.

### DETAILED DESCRIPTION OF THE PREFERRED EMBODIMENTS

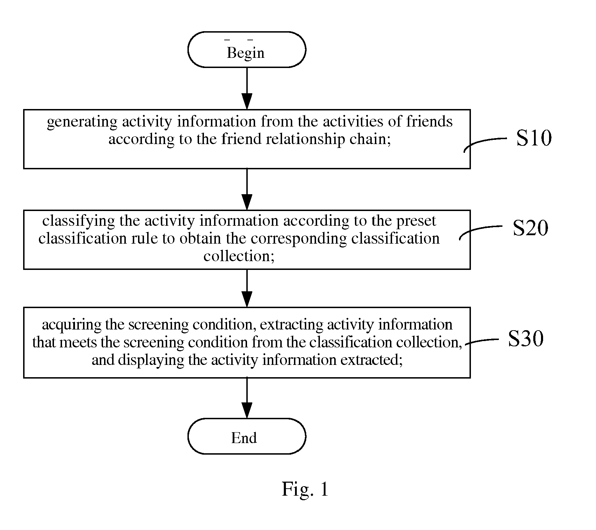

Figure 1 shows a flowchart of method for displaying activities of friends, which includes the following steps:
In step S 10, generates activity information from the activities of friends according to a friend relationship chain. In this embodiment, the friend relationship chain includes the information of all the user's friends and contact, for example, user B, C and D are the friends of user A, then B, C and D as well as their information comprise the simple friend relationship chain of user A. Friends' activities are the events triggered by user's friends in SNS cyberspace. The activity information is generated from the activities of friends, thus it is easy to view in SNS cyberspace for the user. For example, the activities of friends in user's friend relationship chain can be packaged into a feed-type file. If as the network friend of user A, user B releases a log in SNS cyberspace. Then, for user A, the activities of friend B is that B released a log. Activity information could be generated to record the activities of friends in a file, of which the format could be feed type.
In step S20, the activity information is classified according to the preset classification rule to obtain the corresponding classification collection. In this embodiment, the classification rules comprise one or more of an information attribute, a friend attribute, and a user event attribute. Specifically, every activity owns many different information attributes, which may include information type, information generating time and so on. For example, information type can be the log, photo albums, message, participating in or initiating a vote, etc. Friend attribute can be derived from the friend relationship chain, including age, gender, user group which friends belong to. By researching or observing users' behavior, the attribute of users event can be obtained, which includes the users' activities, the keywords users concerning about and users' demands. For example, from research, we can know that the user would like to receive information on the car or travel, and then the current attribute of user event is to obtain information on the car or travel. If user's activity is to search information on education, then the current attribute of user event is to obtain information on education. If the phrase used most frequently by user is environmental protection, then the keyword user concerning about currently is "green", the current attribute of user event is to obtain information on environmental protection. Obtaining one or more in information attribute, a friend attribute or users' event attribute as the classification rules, the large amount of activity information could be classified by using these classification rules. For example, if the classification rule is information attribute, the activity information would be classified by information attribute. As mentioned earlier, information attributes include information type and information generating time, so activity information are classified according to information type and information generating time to obtain classification collection related to information type and information generating time.
In step S30, acquire the screening condition, extract activity information that meets the screening condition from the classification collection, and display the activity information extracted. In this embodiment, acquiring the screening condition inputted by the user, according to the screening condition, the activity information that meets the screening condition from the classification collection can be extracted and displayed. For example, the screening condition could be log for the last three days. In addition, the user can also select multiple screening conditions, such as friends' logs and albums during the last three days.

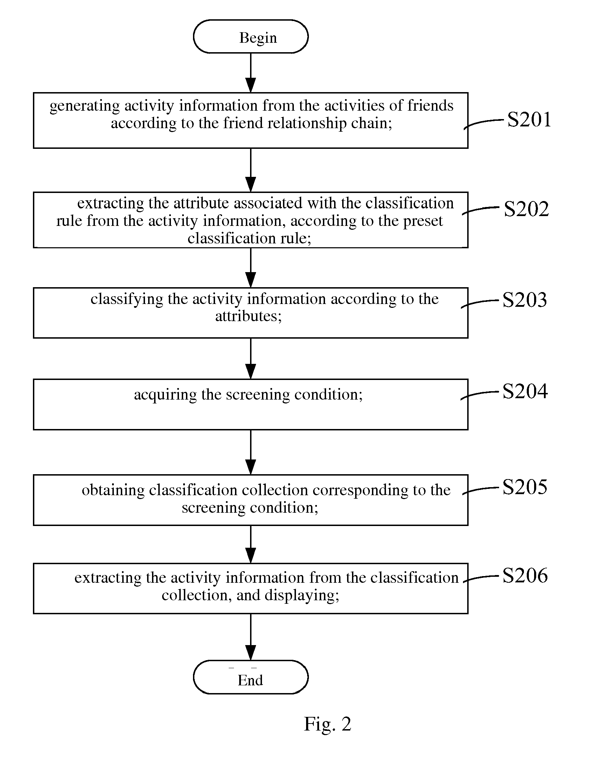

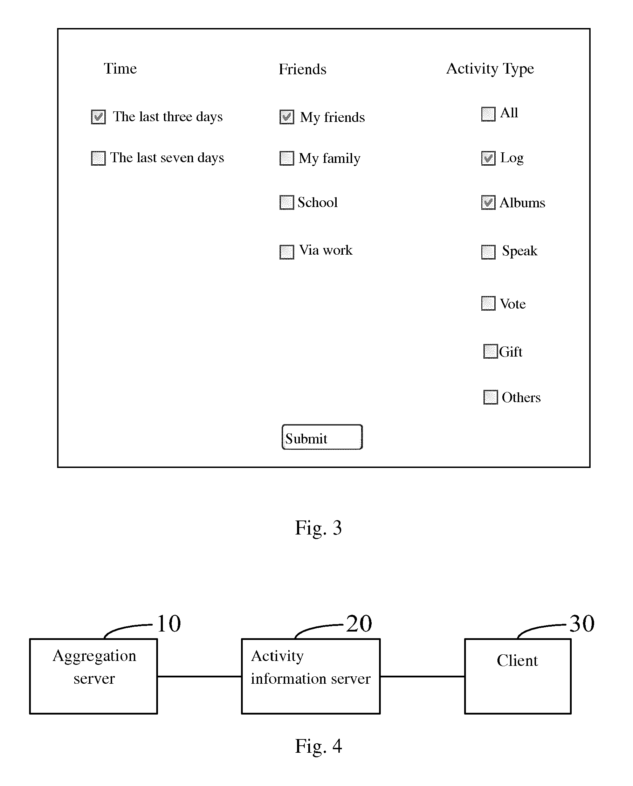

Figure 2 shows the flowchart of a method for displaying activities of friends according to an embodiment, which includes the following steps:
In step S201, the activity information is generated from the activities of friends according to the friend relationship chain. In this embodiment, after the user logs on, according to the friend relationship chain which the user belongs to, we can get the activities in SNS cyberspace triggered by all the friends and contacts in the friend relationship chain, and then generate the corresponding activity information. For example, the activities could be a photo in SNS cyberspace shared by a friend in the friend relationship chain.
In step S202, the attribute associated with the classification rule is extracted from the activity information, according to the preset classification rule. In this embodiment, according to at least one of an information attribute, a friend attribute or users' events attribute, extract the attributes associated with the classification rules from the activity information. For example, if the current classification rule is information attribute, then extract all the information attribute from the activity information, such as information type attribute, information generating time attribute and so on.
In step S203, the activity information according to the attributes is classified. In this embodiment, according to the extracted attributes, classify the friends' activity information in the friend relationship chain one by one.
In step S204, the screening condition is acquired. In this embodiment, get the screening condition inputted by the user through interface diagram, which is shown by Figure 3. In the interface diagram, the screening condition acquired is derived from all the logs and albums of user's friends during the last three days.
In step S205, the classification collection is obtained corresponding to the screening condition. In this embodiment, according to the screening condition, screen the classification collection to get the activity information that totally meets the screening condition.
In other embodiments, the screening condition comprises multiple screening conditions. After step S205, there is another step included: obtaining intersection from the screened classification collection. In this embodiment, if the screening condition has several items, the same and different activity information both exists in the screened classification collection. There is the need to get intersection from the screened classification collection, so we can get the activities meeting all the screening conditions.
In step S206, the activity information is extracted from the classification collection, and displaying the activity information extracted. In this embodiment, display the extracted activity information in friends' SNS cyberspace, so it is easy for the user to view the activities of friends.

Figure 4 shows the schematic diagram of a system displaying activities of friends, the system includes the aggregation server 10, the activity information server 20 and the client 30, wherein:

The aggregation server 10 is configured to generate activity information from the activities of friends according to the friend relationship chain. In this embodiment, the aggregation server 10 generates the activity information from the activities of friends according to all the user's friends and contacts in the friend relationship chain.

The activity information server 20 is configured to classify the activity information according to the preset classification rule to obtain the corresponding classification collection. In this embodiment, as mentioned above, the classification rules that the activity information server 20 gets include one or more of an information attribute, a friend attribute or users' events attribute.

The client 30 is configured to acquire the screening condition, extracting activity information that meets the screening condition from the classification collection, and displaying the activity information extracted. In this embodiment, the client 30 acquires the screening condition inputted by the user, according to the screening condition, extracts and displays activity information that meets the screening condition from the classification collection.

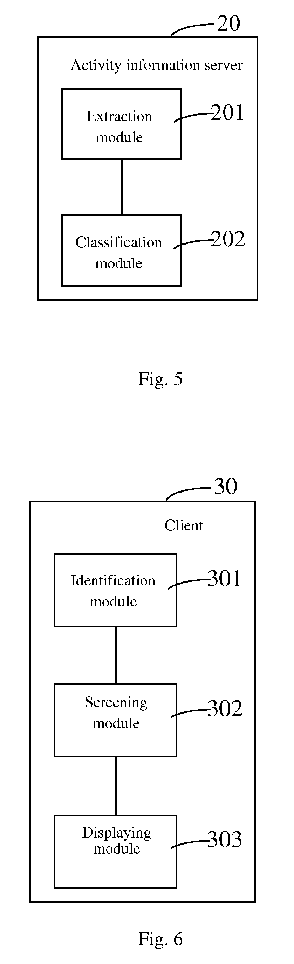

Figure 5 shows the block diagram of an embodiment of the activity information server, the activity information server 20 includes extraction module 201 and classification module 202, wherein:

The extraction module 201 is configured to extract the attribute associated with the classification rule from the activity information, according to the preset classification rule. In this embodiment, the extraction module 201 is configured to extract the attribute associated with the classification rule from the activity information, according to at least one of an information attribute, a friend attribute or a users' events attribute.

The classification module 202 is configured to classify the activity information according to the attributes. In this embodiment, according to the extracted attributes, the classification module 202 classifies the friends' activity information in the friend relationship chain one by one.

Figure 6 shows the block diagram of an embodiment of the client, the client 30 includes an identification module 301, a screening module 302 and a displaying module 303, wherein:

The identification module 301 is configured to acquire the screening condition. In this embodiment, the identification module 301 gets the screening condition inputted by the user through interface.

The screening module 302 is configured to obtain classification collection corresponding to the screening condition. In this embodiment, according to the screening condition, screening module 302 screens the classification collection to get the activity information that totally meet the screening condition.

In other embodiments, if the screening condition comprises multiple screening conditions, the client 30 further comprises a merge module, which is configured to obtain intersection from the screened classification collection. In this embodiment, if the screening condition has several items, the same and different activity information both exist in the screened classification collection. There is a need to using the merge module in the client 30 to get intersection from the screened classification collection, thus the activities that meet all the screening conditions can be obtained.

The displaying module 303 is configured to extract the activity information from the classification collection, and displaying the activity information extracted.

Furthermore, the invention also provides a computer storage media for storing the computer-executable instructions, which can control the computer to execute a method for displaying activities of friends.

The embodiment below indicates the methods, system as well as the computer storage media for displaying activities of friends. In this embodiment, the client 30 which is used for user's logging on and the aggregation server 10 obtains the activities in SNS cyberspace triggered by all the friends and contacts in the friend relationship chain, and packages the activities of friends into a activities file with feed type. The extraction module 201 extracts information attribute and friend attribute from obtained activity information. The classification module 202 is configured to classify the activity information to form the classification collection, according to information type, information generating time, age, gender, user group which friends belong to. The identification module 301 of the client 30 obtains the screening condition inputted by the user through interface diagram, which is shown in Figure 3. In the screening condition, information generating time is in recent three days, the user's group friends belong to is "my friend" , and information type are log and photo album. Because the screening condition have multiple items, after screening module 302 obtains the screened classification collection, the merge module gets intersection from the screened classification collection to generate the activities which is used for displaying module 303 to display to the user.

Through the method and system for displaying activities of friends, after classifying and screening the activity information, we can get and further display friends' activities which meet the screening condition inputted by the user. The invention realizes the rapid screening in large amount of information, providing all the friends' effective activities rapidly for the user, meeting users' demand for personalized browsing.

It should be emphasized that the above-described embodiments of the present invention, are merely possible examples of implementations. Many variations and modifications may be made to the above-described embodiments of the invention without departing substantially from the spirit and principles of the invention. All such modifications and variations are intended to be included herein within the scope of this disclosure and the present invention and protected by the following claims.

## Claims

1. A method for displaying activities of friends, comprising the following steps:
generating activity information from the activities of friends according to a friend relationship chain;
classifying the activity information according to a preset classification rule to obtain a corresponding classification collection; and
acquiring a screening condition, extracting activity information that meets the screening condition from the classification collection, and displaying the activity information extracted.

2. The method of claim 1, wherein the step of classifying the activity information according to the preset classification rule to obtain the corresponding classification collection, comprises the following steps:
extracting an attribute associated with the classification rule from the activity information, according to the preset classification rule; and
classifying the activity information according to the attributes to form the classification collection.

3. The method of claim 2, wherein the classification rule comprises at least one of an information attribute, a friend attribute, and a user event attribute.

4. The method of any one of claims 1 to 3, wherein the step of acquiring the screening condition, extracting activity information that meets the screening condition from the classification collection, and displaying the activity information extracted, comprises the following steps:
acquiring the screening condition;
obtaining classification collection corresponding to the screening condition; and
extracting the activity information from classification collection corresponding to the screening condition, and displaying the activity information extracted.

5. The method of claim 4, wherein the screening condition comprises multiple screening conditions, and after the step of obtaining the classification collection corresponding to the screening condition, the method further comprises:
obtaining intersection from the classification collection corresponding to the screening condition.

6. A system for displaying activities of friends, at least comprising:
an aggregation server configured to generate activity information from the activities of friends according to a friend relationship chain;
an activity information server configured to classify the activity information according to the preset classification rule to obtain a corresponding classification collection; and
a client configured to acquire a screening condition, extracting activity information that meets the screening condition from the classification collection, and displaying the activity information extracted.

7. The system of claim 6, wherein the activity information server comprises:
an extraction module configured to extract an attribute associated with the classification rule from the activity information, according to the preset classification rule; and
a classification module configured to classify the activity information according to the attribute to form the classification collection.

8. The system of claim 7, wherein the classification rule comprises at least one of an information attribute, a friend attribute, and a user event attribute.

9. The system of any one of claims 6 to 8, wherein the client comprises:
an identification module configured to acquire the screening condition;
a screening module configured to obtain classification collection corresponding to the screening condition; and
a displaying module configured to extract the activity information from the classification collection corresponding to the screening condition, and display the activity information extracted.

10. The system of claim 9, wherein the screening condition comprises multiple screening conditions, the client further comprises:
a merge module configured to obtain intersection from the classification collection corresponding to the screening condition.

11. A computer storage media for storing computer-executable instructions, the computer-executable instructions being for controlling a computer to execute a method for displaying activities of friends, the method comprises:
generating activity information from the activities of friends according to a friend relationship chain;
classifying the activity information according to a preset classification rule to obtain the corresponding classification collection;
acquiring a screening condition, extracting activity information that meets the screening condition from the classification collection, and displaying the activity information extracted.

12. The computer storage media of claim 11, wherein the step of classifying the activity information according to the preset classification rule to obtain the corresponding classification collection, comprises:
extracting an attribute associated with the classification rule from the activity information, according to the preset classification rule; and
classifying the activity information according to the attribute to form the classification collection.

13. The computer storage media of claim 12, wherein the classification rule comprises at least one of an information attribute, a friend attribute, and a user event attribute.

14. The computer storage media of any one of claims 11 to 13, wherein the step of acquiring the screening condition, extracting activity information that meets the screening condition from the classification collection, and displaying the activity information extracted, comprises:
acquiring the screening condition;
obtaining classification collection corresponding to the screening condition; and
extracting the activity information from the classification collection corresponding to the screening condition, and displaying the activity information extracted.

15. The computer storage media of claim 14, wherein the screening condition comprises multiple screening conditions, and after the step of obtaining classification collection corresponding to the screening condition, the method further comprises:
obtaining intersection from the classification collection corresponding to the screening condition.
